# DEMANDE DE BREVET EUROPEEN

(11) **EP 2 978 276 A1**
(43) Date de publication de la demande: **27.01.2016**
(21) Numéro de dépôt: 14178632.7
(22) Date de dépôt: 25.07.2014
(51) Int. Cl.: H04W 88/10, H04W 4/00, G06Q 30/02

(54) **BALISE INFORMATIVE A MULTIPLES INTERFACES DE COMMUNICATION**

(71) Demandeur: The Swatch Group Research and Development Ltd., 2074 Marin (CH)
(72) Inventeur: Randjelovic, Zoran, 2035 Corcelles (CH)
(74) Mandataire: Tournel, Maxime Jean-Joseph

(57) **Abrégé**

La présente invention concerne une balise de communication (100) comprenant une unité de calcul (100) associée à une unité mémoire (108) pour la sauvegarde de données, à un circuit d'horloge (110) et un circuit de communication (112), ladite balise étant alimentée par une unité d'alimentation (104), caractérisée en ce que ledit circuit de communication comprend une première unité d'interface (116) utilisant un premier protocole (P1), une seconde unité d'interface (118) utilisant un second protocole (P2) et une antenne (114) reliée à chacune des unités d'interfaces.

## Description

La présente invention concerne une balise comprenant un microcontrôleur associé à une unité mémoire pour la sauvegarde de données, à un circuit d'horloge et un circuit de communication. Ce circuit de communication comprend une antenne, une première interface utilisant un premier protocole et une seconde interface utilisant un second protocole.

### ART ANTERIEUR

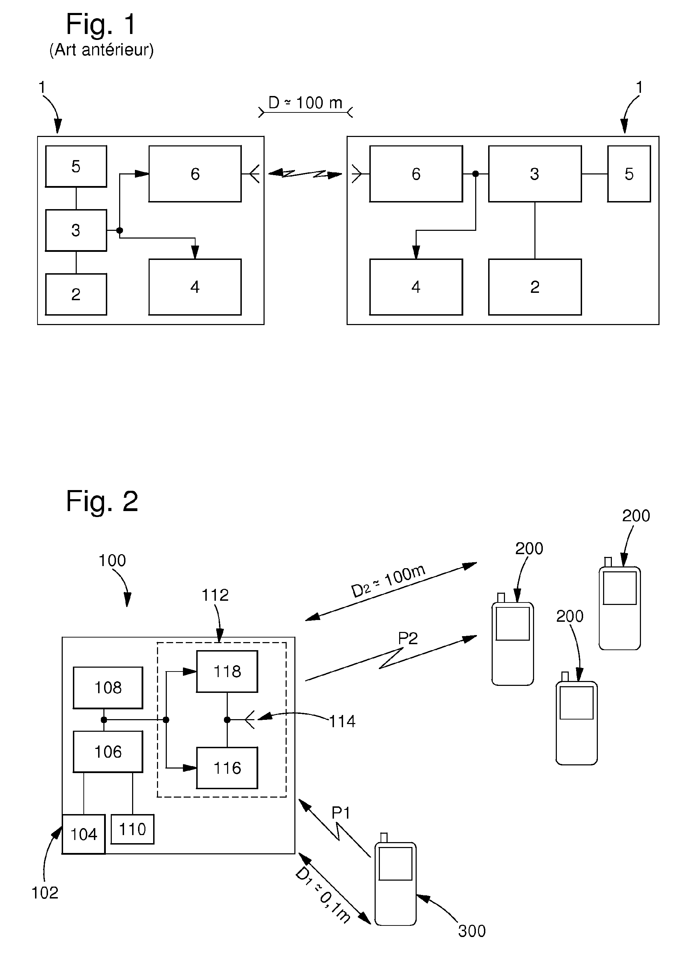

Il est connu des balises 1 c'est-à-dire des dispositifs électroniques autoalimentés par une alimentation 2 comprenant un microcontrôleur 3 associé à une unité mémoire 4 pour la sauvegarde de données, à un circuit d'horloge 5 et un circuit de communication 6 utilisant un protocole de communication comme visible à la figure 1.

Ces balises permettent, via leur circuit de communication, de diffuser des messages à destination de terminaux mobiles tels que des téléphones portables, tablettes ou ordinateurs. Ces terminaux mobiles sont donc compatibles avec le protocole de communication de la balise.

Les messages envoyés peuvent se présenter sous la forme de publicités ou de point d'intérêt. Par exemple, une balise située dans un grand magasin enverra, aux terminaux mobiles possédant une application dédiée audit grand magasin, des messages signalant aux consommateurs les offres de dernières minutes en cours dans le grand magasin. Dans un autre exemple, une balise située dans une zone aéroportuaire pourra fournir aux consommateurs des informations signalant des retards sur des vols spécifiques ou des informations de température et d'humidité aux voyageurs qui arrivent.

Le protocole de communication généralement utilisé est le protocole Bluetooth. Ce protocole Bluetooth définit en effet 3 classes d'émetteurs proposant des portées différentes en fonction de leur puissance d'émission allant de 1 mW à 100mW pour une portée D allant respectivement de 10m à 100m.

Toutefois, un inconvénient de ce protocole Bluetooth est qu'il est par nature non sécurisé.

Comme ce protocole Bluetooth n'est pas sécurisé, il peut être nécessaire d'utiliser un autre protocole pour opérer un échange d'éléments confidentiels comme par exemple une clé de cryptage qui sera ensuite utilisée pour crypter la communication utilisant le protocole Bluetooth.

Par ailleurs, la portée de plusieurs mètres du protocole Bluetooth rend possible l'interception des données par un appareil tiers indésirable.

### RESUME DE L'INVENTION

L'invention a pour but de fournir une balise de communication permettant d'être programmée ou configurée de façon sure tout en étant capable d'envoyer des données vers une multitude de terminaux mobiles.

A cet effet, l'invention concerne une balise de communication comprenant un microcontrôleur associé à une unité mémoire pour la sauvegarde de données, à un circuit d'horloge et un circuit de communication, ladite balise étant alimenté par une unité d'alimentation, caractérisée en ce que ledit circuit de communication comprend une première unité d'interface utilisant un premier protocole, une seconde unité d'interface utilisant un second protocole et une antenne reliée à chacune des unités d'interfaces, le premier protocole étant utilisé pour la réception de données alors que le second protocole est utilisé pour l'envoi de données.

Dans un premier mode de réalisation avantageux, le premier protocole est un protocole dont la portée est inférieure à 1 mètre.

Dans un deuxième mode de réalisation avantageux, le second protocole est un protocole dont la portée est supérieure à 1 mètre.

Dans un troisième mode de réalisation avantageux, le premier protocole est un protocole de communication en champ proche.

Dans un quatrième mode de réalisation avantageux, le second protocole est un protocole de communication Bluetooth™.

Dans un cinquième mode de réalisation avantageux, le premier protocole utilisé par la première unité d'interface permet également la transmission de données.

Dans un sixième mode de réalisation avantageux, la balise comprend en outre au moins un capteur fournissant des données représentatives d'une grandeur physique, ces données représentatives d'une grandeur physique étant diffusées par la seconde unité d'interface.

Dans un autre mode de réalisation avantageux, le capteur est un capteur de localisation.

Dans un autre mode de réalisation avantageux, des données provenant dudit au moins un capteur sont enregistrées dans l'unité mémoire de la balise.

Dans un autre mode de réalisation avantageux, des données peuvent être téléchargées par la première unité d'interface et stockées dans l'unité mémoire.

Dans un autre mode de réalisation avantageux, la première unité d'interface est reliée à une première antenne et en ce que la seconde unité d'interface est reliée à une seconde antenne.

Dans un autre mode de réalisation avantageux, la balise est munie d'un système récupérateur d'énergie pour l'alimentation de ladite balise.

Dans un autre mode de réalisation avantageux, la première unité d'interface est utilisée comme récupérateur d'énergie pour l'alimentation de ladite balise.

### BREVE DESCRIPTION DES FIGURES

Les buts, avantages et caractéristiques de la présente invention apparaîtront plus clairement dans la description détaillée suivante d'au moins une forme de réalisation de l'invention donnée uniquement à titre d'exemple non limitatif et illustrée par les dessins annexés sur lesquels :
- la figure 1 représente de manière schématique une balise selon l'art antérieur;
- la figure 2 représente de manière schématique une balise selon l'invention;
- la figure 3 représente de manière schématique une balise selon une première variante de l'invention;
- la figure 4 représente de manière schématique une balise selon une seconde variante de l'invention;
- la figure 5 représente de manière schématique une balise avec deux antennes et système récupérateur d'énergie.

### DESCRIPTION DETAILLEE

Sur la figure 2 est représentée une balise 100 selon la présente invention. Cette balise 100 se présente sous la forme d'un boitier 102 dans lequel un dispositif électronique est placé. Ce dispositif électronique est alimenté par une unité d'alimentation 104. Cette unité d'alimentation 104 peut être une pile ou un accumulateur ou une unité autonome telle une cellule solaire. L'avantage d'une telle unité autonome est que cette dernière soit indépendante au niveau énergétique.

Le dispositif électronique comporte une unité de calcul ou microcontrôleur 106 associé à une unité mémoire 108. Cette unité mémoire 108 sert à stocker des données et peux être une mémoire non volatile utilisant la technologie flash (NOR, NAND).

Le dispositif électronique comporte également un circuit d'horloge 110 pour le cadencement de la balise 100 et comme base de temps précise pour l'enregistrement de données.

Le dispositif électronique comporte en outre un circuit de communication 112 comprenant au moins une antenne 114 pour communiquer avec l'extérieur. Ce circuit de communication 112 permet en outre d'envoyer des données vers des appareils dédiés 200 comme des téléphones mobiles, des tablettes, des ordinateurs ou des montres.

Ce circuit de communication 112 permet ainsi de recevoir et de transmettre des données de configuration et des données d'information pouvant être stockées dans l'unité mémoire 108.

Les données de configuration peuvent être la fréquence d'envoi de la balise ou des paramètres de consommation alors que les données d'information peuvent être des données telles que des données de localisation ou des données d'alerte liées à des applications spécifiques.

Avantageusement selon l'invention, le circuit de communication 112 comprend une première unité d'interface 116 et une seconde unité d'interface 118, la première unité d'interface 116 fonctionnant selon un premier protocole P1 et la seconde unité d'interface 118 fonctionnant selon un second protocole P2.

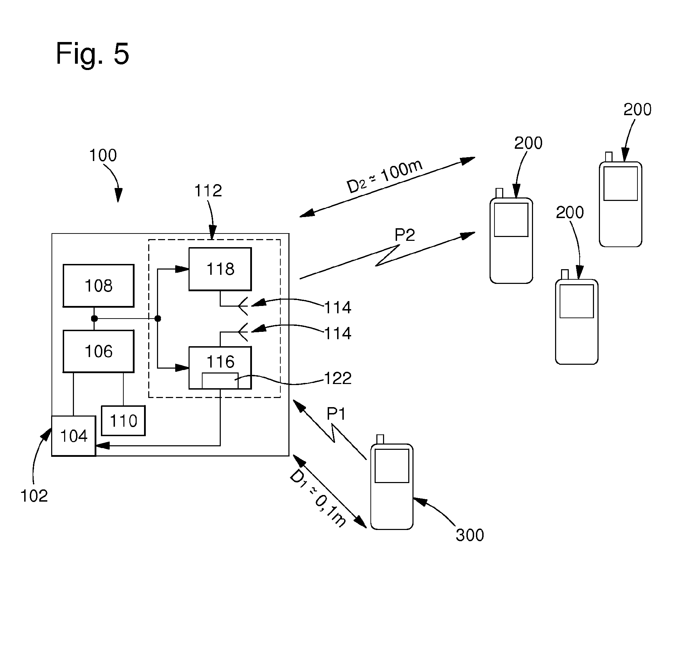

Dans un premier mode de réalisation, la première unité d'interface 116 utilisant le premier protocole P1 est utilisé pour la réception de données alors que la seconde unité d'interface 118 utilisant le second protocole P2 est utilisée pour la transmission d'information. On pourra comprendre alors que la première unité d'interface 116 et la seconde unité d'interface 118 partagent la même antenne 114 mais il est également envisageable que chaque unité d'interface est reliée à sa propre antenne 114 comme visible à la figure 5.

Cette configuration avec deux unités d'interfaces permet d'avoir deux protocoles différents pour la première unité d'interface 116 et pour la seconde unité d'interface 118 soit deux protocoles différents pour la réception de données ou la transmission de données. Ainsi, l'administrateur de cette ou ces balises pourra communiquer avec la ou les balises 100 en utilisant le premier protocole P1 alors que la ou les balises 100 communiqueront avec des terminaux mobiles clients 200 via le second protocole P2. L'administrateur communiquera avec la balise 100 via un terminal administrateur 300 pouvant par exemple être un téléphone mobile, une tablette, un ordinateur ou une montre.

Cette possibilité d'avoir deux protocoles différents pour la réception de données et pour la transmission de données permet d'utiliser un protocole sécurisé pour la réception de données.

Selon un exemple de réalisation avantageux, la première unité d'interface 116 utilise, comme premier protocole P1, le protocole de communication en champ proche (en anglais near field communication, NFC). Ce protocole NFC est une technologie de communication sans fil à courte portée et haute fréquence, permettant l'échange d'informations entre des périphériques jusqu'à une distance D1 d'environ 10 cm. La seconde unité d'interface 118 utilise, comme second protocole P2, le protocole Bluetooth dont la portée D2 peut aller de 10m à 100m selon la puissance du signal. Le protocole P2 pourra être, de façon encore plus avantageuse, un protocole basse consommation comme le protocole Bluetooth low energy (BLE).

Dans cet exemple de réalisation, la réception de données est sécurisée par deux moyens.

Premièrement, la sécurité de la communication est opérée par la faible portée d'un signal utilisant le protocole NFC qui empêche une interception dudit signal par un tiers. Deuxièmement, le protocole NFC intègre directement des algorithmes de codage de sorte qu'il n'y a pas besoin d'un signal externe pour effectuer un échange de clé de codage pour crypter la communication.

Ainsi la présente invention permet à la balise de recevoir, par un administrateur, des données de configuration ou des données d'informations de façon sécurisée tout en étant capable d'envoyer des données sur des appareils mobiles 200 à une portée supérieure à celle dont le protocole NFC est capable.

Par conséquent, l'administrateur qui souhaite envoyer des données pour programmer la balise va, en premier lieu, établir une connexion avec la balise via le premier protocole P1 c'est-à-dire le protocole de communication en champ proche (NFC). Cela lui permet d'envoyer de façon sure des données pour programmer la balise. Par exemple, ces données sont liées à son fonctionnement ou liées à l'information que ladite balise 100 diffuse.

Une fois ces données reçues par la balise 100, cette dernière va alors les utiliser soit pour se configurer soit pour transmettre une information liée à ces données. Lors de la transmission de l'information liée à ces données, la seconde unité d'interface 118 utilisant le second protocole est sélectionnée et mise en fonctionnement.

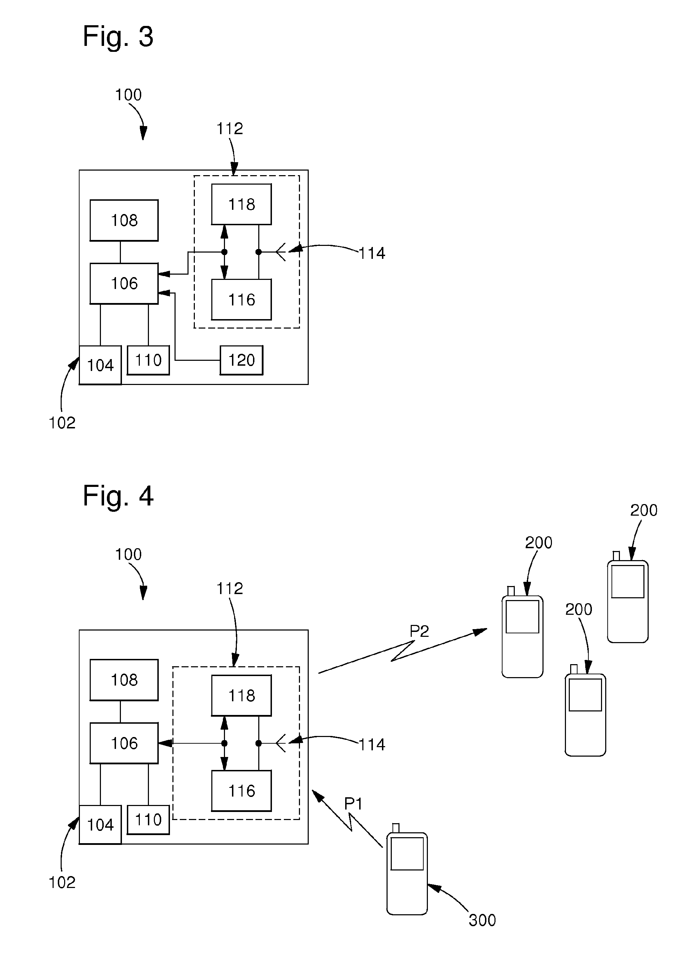

Dans une première variante visible à la figure 3, la balise 100 comprend en outre au moins un capteur 120 faisant des mesures à des intervalles plus ou moins réguliers, ces intervalles pouvant être configurés. Ce capteur 120 fournit des données d'information qui peuvent ainsi être envoyées à différents appareils mobiles 200.

Par exemple, le capteur 120 est un capteur de pression permettent de déterminer une altitude qui sera ensuite envoyée à des randonneurs les informant de l'altitude à laquelle il se trouve. Cette information d'altitude peut également servir à la calibration d'un altimètre portable équipant par exemple une montre.

Dans un autre exemple, le capteur 120 est un capteur de localisation. Ce capteur de localisation tel un capteur GPS fournit une donnée relative à une coordonnée de sorte que l'utilisateur sait où il se trouve. Un réseau comprenant une multitude de ces balises 100 peut être utilisé pour opérer une navigation, l'appareil mobile 200 de l'utilisateur étant configuré pour mesurer la puissance du signal reçu. Plus la puissance reçue augmente et plus la balise est proche.

Dans un second mode de réalisation, visible à la figure 4, il est prévu que la première unité d'interface 116 puisse communiquer de façon bidirectionnelle. En effet, il est envisageable que la première unité d'interface 116 utilisant le premier protocole P1 permettant l'envoi de données vers la balise 100 puisse être utilisée pour la transmission de données depuis la balise 100 vers un terminal administrateur 300. Cette capacité permet de transférer des données de façon sécurisée.

Cette capacité peut être, par exemple, utilisée pour télécharger des informations de configuration de la balise ou permettre l'envoi de tableaux de données issues d'un capteur vers un terminal central.

Dans un autre exemple de réalisation, cela permet d'utiliser la seconde unité d'interface 118 utilisant le protocole P2 qui peut être un protocole gourmand en énergie (Bluetooth) pour n'envoyer que des messages courts à intervalle régulier pour attirer l'attention du potentiel client / consommateur / passager. Si ce dernier est intéressé par le message reçu via le protocole P2, il devra se rapprocher de la balise pour obtenir les détails de l'offre ou du message via un protocole moins gourmand en énergie (par exemple la balise NFC peut être passive et activée par le lecteur se trouvant dans le téléphone mobile).

On comprendra que diverses modifications et/ou améliorations et/ou combinaisons évidentes pour l'homme du métier peuvent être apportées aux différents modes de réalisation de l'invention exposée ci-dessus sans sortir du cadre de l'invention défini par les revendications annexées.

Bien entendu, d'autres protocoles pourront être utilisés comme par exemple les protocoles ZigBee, Wi-Fi ou Wi-max.

Par ailleurs, la balise selon la présente invention peut être conçue pour faire de la récolte d'énergie (en anglais : energy harvesting). Pour cela, la balise est munie d'un système récupérateurs d'énergie 122 utilisant de l'énergie vibratoire, chimique, solaire, éolien, thermique pour fournir de l'électricité à la balise. De même, il est envisageable que la première unité d'interface 116 utilisant le premier protocole P1 soit utilisée pour la réception de données. On comprend par-là que la première unité d'interface 116 comprenne ce système récupérateurs d'énergie 122 et que les signaux reçus par cette première interface sont utilisés par le système récupérateur d'énergie pour alimenter ou recharger la balise comme visible à la figure 5.

## Revendications

1. Balise de communication (100) comprenant une unité de calcul (106) associée à une unité mémoire (108) pour la sauvegarde de données, à un circuit d'horloge (110) et un circuit de communication (112), ladite balise étant alimentée par une unité d'alimentation (104), **caractérisée en ce que** ledit circuit de communication comprend une première unité d'interface (116) utilisant un premier protocole (P1), une seconde unité d'interface (118) utilisant un second protocole (P2) et au moins une antenne (114) permettant aux unités d'interfaces de communiquer, le premier protocole étant utilisé pour la réception de données alors que le second protocole est utilisé pour l'envoi de données.

2. Balise selon la revendication 1, **caractérisée en ce que** le premier protocole (P1) est un protocole dont la portée (D1) est inférieure à 1 mètre.

3. Balise selon la revendication 1 ou 2, **caractérisée en ce que** le second protocole (P2) est un protocole dont la portée (D2) est supérieure à 1 mètre.

4. Balise selon la revendication 2, **caractérisée en ce que** le premier protocole (P1) est un protocole de communication en champ proche.

5. Balise selon la revendication 3, **caractérisée en ce que** le second protocole (P2) est un protocole de communication Bluetooth™.

6. Balise selon l'une des revendications précédentes, **caractérisée en ce que** le premier protocole (P1) utilisé par la première unité d'interface (116) permet également la transmission de données.

7. Balise selon l'une des revendications précédentes, **caractérisée en ce qu'**elle comprend en outre au moins un capteur (120) fournissant des données représentatives d'une grandeur physique, ces données représentatives d'une grandeur physique étant diffusées par la seconde unité d'interface.

8. Balise selon la revendication 7, **caractérisée en ce que** le capteur (120) est un capteur de localisation.

9. Balise selon l'une des revendications précédentes, **caractérisée en ce que** des données provenant dudit au moins un capteur (120) sont enregistrées dans l'unité mémoire (108) de la balise.

10. Balise selon l'une des revendications précédentes, **caractérisée en ce que** des données peuvent être téléchargées par la première unité d'interface (116) et stockées dans l'unité mémoire (108).

11. Balise selon l'une des revendications précédentes, **caractérisée en ce que** la première unité d'interface est reliée à une première antenne et **en ce que** la seconde unité d'interface est reliée à une seconde antenne.

12. Balise selon l'une des revendications précédentes, **caractérisée en ce que** ladite balise est munie d'un système récupérateur d'énergie pour l'alimentation de ladite balise.

13. Balise selon la revendication 12, **caractérisée en ce que** la première unité d'interface (116) est utilisée comme récupérateur d'énergie pour l'alimentation de ladite balise.
